# EUROPEAN PATENT SPECIFICATION

(11) **EP 2 747 236 B1**
(45) Date of publication and mention of the grant of the patent: **22.06.2016**
(21) Application number: 13186483.7
(22) Date of filing: 27.09.2013
(51) Int. Cl.: H02J 7/00, H04B 5/00, H04M 1/06, B60R 11/02, H02J 7/02, B60R 16/03, B60R 11/00

(54) **Wireless power transmitting apparatus for vehicle**
Drahtlose Leistungsübertragungsvorrichtung für ein Fahrzeug
Appareil de transmission de puissance sans fil pour véhicule

(30) Priority: 24.12.2012 KR 20120152313
(43) Date of publication of application: 25.06.2014
(73) Proprietor: Hanrim Postech Co., Ltd, Suwon-si, Gyeonggi-do (KR)
(72) Inventor: Jung, Chun-Kil, Seoul (KR)
(74) Representative: Zardi, Marco

(56) References cited:
- DE-U1-202006 018 347
- US-A- 5 915 974
- US-A1- 2011 192 857
- US-A1- 2011 291 614

## Description

### BACKGROUND

### Field

The present invention relates to a wireless power transmitting apparatus mounted and used in a vehicle.

### Description of the Related Art

Generally, a portable electronic device such as a mobile communication terminal, a personal digital assistant (PDA), or the like, is mounted with a rechargeable secondary battery as a battery. In order to charge the battery, a separate charging apparatus providing electrical energy to the battery of the portable electronic device using a home commercial power is required.

Typically, the charging apparatus and the battery include separate contact terminals formed at outer portions thereof, respectively, such that the charging apparatus and the battery are electrically connected to each other by connecting the contact terminals to each other. However, when the contact terminals protrude to the outside as described above, the contact terminals are not attractive in view of appearance and are polluted with external foreign materials, such that a contact state
therebetween easily becomes bad. In addition, when the battery is short-circuited or exposed to moisture due to carelessness of a user, charged energy may be easily lost.

As an alternative to the above-mentioned contact type charging scheme, a wireless power charging system in which a power is wirelessly transferred so that the battery is charged in a scheme in which the contact terminals of each of the charging apparatus and the battery do not contact each other has been suggested.

The above-mentioned wireless power charging system may be generally put and used on a desk, a table, or the like, or be used in a vehicle. However, the case in which disposition of the portable electronic device is changed in the vehicle frequently occurs, such that it is difficult to stably support the power to the wireless power transmitting apparatus.

US 2011/291614 A1 discloses a wireless charge provided for use in an automobile and includes a main body having a transmitter circuit and a power member. US 2011/192857 A1 discloses a mobile electronic device accessory system comprising a mobile electronic device case with a surface and a first attachment mechanism. US 5915974 A discloses a rotary connector for electrically connecting a set of headphones to a portable personal audio device to help prevent stress on the electrical wires of the set of headphones. DE20 2006 018347 U1 discloses a holding device for mobile telecommunication devices, in particular for navigation devices.

### SUMMARY

An object of the present invention is to provide a wireless power transmitting apparatus for a vehicle capable of freely changing a disposition state of a wireless power receiving apparatus that is being charged while performing wireless charging for the wireless power receiving apparatus.

According to an exemplary embodiment of the present invention, there is provided a wireless power transmitting apparatus for a vehicle, including: a support module including a support body having a first connection part, a connection jack configured to be connected to the support body and be connected to a power supply
jack of the vehicle, and a first terminal installed at the first connection part and electrically connected to the connection jack; and a charging module including a charging body having a second connection part rotatably connected to the first connection part, a second terminal installed at the second connection part and connected to the first terminal, and an output unit configured to output a wireless power signal by a power input from the connection jack through the second terminal.

The first connection part may include: a head part having a hemispherical shape; and a neck part extended from the head part and having a cross-sectional area smaller than that of a maximum cross-sectional area part of the head part.

The second connection part may include: a recess part configured to accommodate the head part therein and having a hemispherical shape; and a sidewall part protruding so as to enclose the recess part and including a catching part caught by the neck part.

The first terminal may include: a free terminal formed at a free end of the head part; and a ring terminal formed in a ring shape along a circumference of the maximum cross-sectional area part of the head part.

The second terminal may include: a central terminal formed at the center of the recess part and connected to the free terminal; and an inner peripheral terminal formed in a circumferential direction on an inner peripheral surface of the sidewall part and connected to the ring terminal.

The sidewall part may include an outer peripheral screw thread formed on an outer peripheral surface thereof, and the second connection part may include a clamping pipe having a hollow part and an inner peripheral screw thread provided at the hollow part and be screwed to the outer peripheral screw thread.

The support body may include: a support part having a support surface supported by the vehicle; an extension part extended from the support part up to the first connection part; and an attachment pad installed on the extension part so as to be overlapped with the support surface and including a silicon plate and a reinforcing plate installed at a region of the silicon plate and made of a material having a coefficient of friction higher than that of the silicon plate.

The reinforcing plate may include a sponge layer formed in a circular ring shape.

The charging body may include a charging surface and an installation surface opposite to the charging surface and having the second connection part installed thereon, and the output unit may be disposed between the charging surface and the installation surface and be configured to output the wireless power signal toward the charging surface.

The charging body may further include a support guard protruding from a side part of the charging surface and configured to support a wireless power receiving apparatus put on the charging surface.

According to another exemplary embodiment of the present invention, there is provided a wireless power transmitting apparatus for a vehicle, including: a support module configured to be connected to a power supply jack of the vehicle; and a charging module configured to be connected to the support module so that a relative position thereof is variable with respect to the support module and to output a wireless power signal by a power of the power supply jack input from the support module.

The support module may include a support body having a first connection part, a connection jack configured to be connected to the power supply jack, and a first terminal electrically connected to the connection jack, and the charging module may include a charging body having a second connection part rotatably connected to the first connection part, a second terminal connected to the first terminal, and an output unit configured to generate the wireless power signal by a power input through the second terminal.

The first connection part may include: a head part having a hemispherical shape; and a neck part extended from the head part and having a cross-sectional area smaller than that of a maximum cross-sectional area part of the head part.

The second connection part may include: a recess part configured to accommodate the head part therein and having a hemispherical shape; and a sidewall part protruding so as to enclose the recess part and including a catching part caught by the neck part.

The first terminal may be installed at the first connection part, and the second terminal may be installed at the second connection part.

### BRIEF DESCRIPTION OF THE DRAWINGS

FIG. 1 is a perspective view showing a state in which a wireless power receiving apparatus 300 is mounted on a charging module 200 of a wireless power transmitting apparatus 10 for a vehicle according to an exemplary embodiment of the present invention;
FIG. 2 is an exploded perspective view of the wireless power transmitting apparatus 10 for a vehicle according to the exemplary embodiment of the present invention of FIG. 1;
FIG. 3 is a perspective view showing an attachment pad 119 of a support module 100 of FIG. 2;
FIG. 4 is a block diagram for describing wireless charging between an output unit 250 of the charging module 200 of FIG. 2 and the wireless power receiving apparatus 300; and
FIGS. 5 to 10 are graphs showing a charging efficiency depending on a degree of a battery cell module 330 of the wireless power receiving apparatus 300 that becomes distant from the wireless power transmitting apparatus 10 according to the exemplary embodiment of the present invention.

### DETAILED DESCRIPTION

Hereinafter, a wireless power transmitting apparatus for a vehicle according to an exemplary embodiment of the present invention will be described in detail with reference to the accompanying drawings. In the present specification, throughout the exemplary embodiments of the present invention, similar components will be denoted by the same or similar reference numerals and a description thereof will be replaced by a first description.

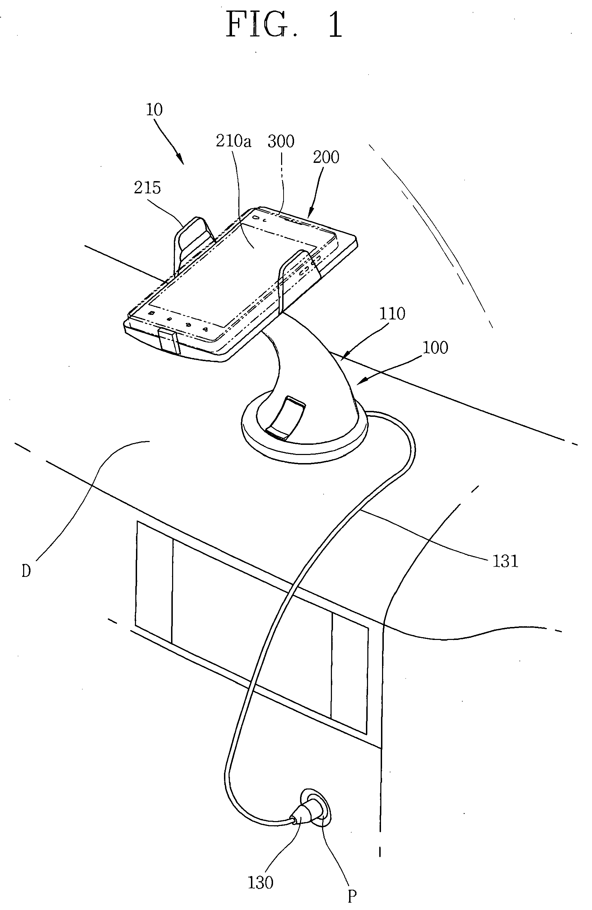

FIG. 1 is a perspective view showing a state in which a wireless power receiving apparatus 300 is mounted on a wireless power transmitting apparatus 10 for a vehicle according to an exemplary embodiment of the present invention.

Referring to FIG. 1, the wireless power transmitting apparatus 10 for a vehicle may be installed on a dash board D of the vehicle. To this end, the wireless power transmitting apparatus 10 for a vehicle may include a support module 100 and a charging module 200.

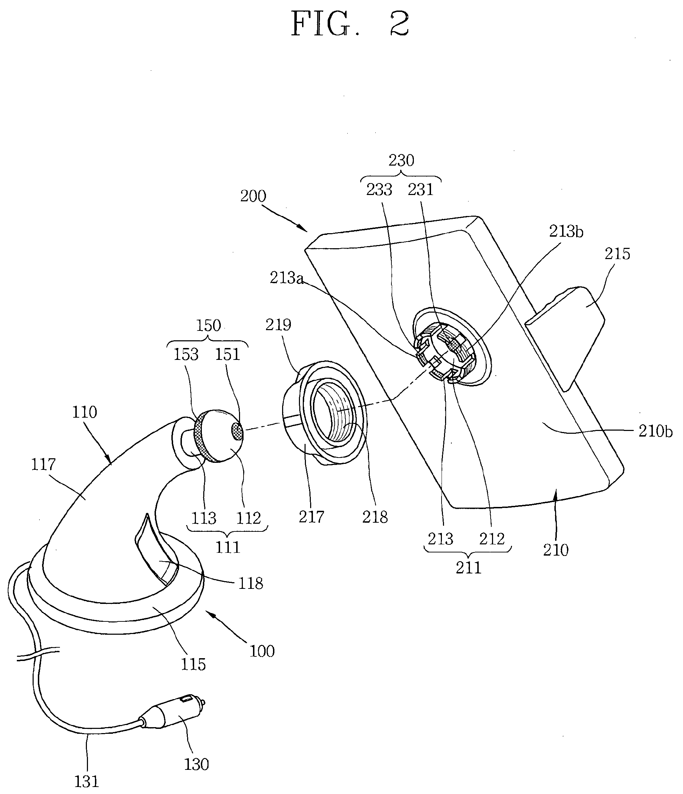

The support module 100 is a component supported by the dash board D. More specifically, the support module 100 may include a support body 110, a connection jack 130, and a first terminal 150 (See FIG. 2). The support body 110 may be formed so that a part (a support part 115 (See FIG. 2)) thereof contacting the dash board D has a wide cross section and a part thereof connected to the charging module 200 has relatively narrow cross section. The connection jack 130 is a medium connected to a power supply jack P of the vehicle to receive a power of the vehicle. An electric wire 131 connected to the connection jack 130 is extended into the support body 110. The first terminal 150 is a medium transferring the power input through the connection jack 130 to the charging module 200.

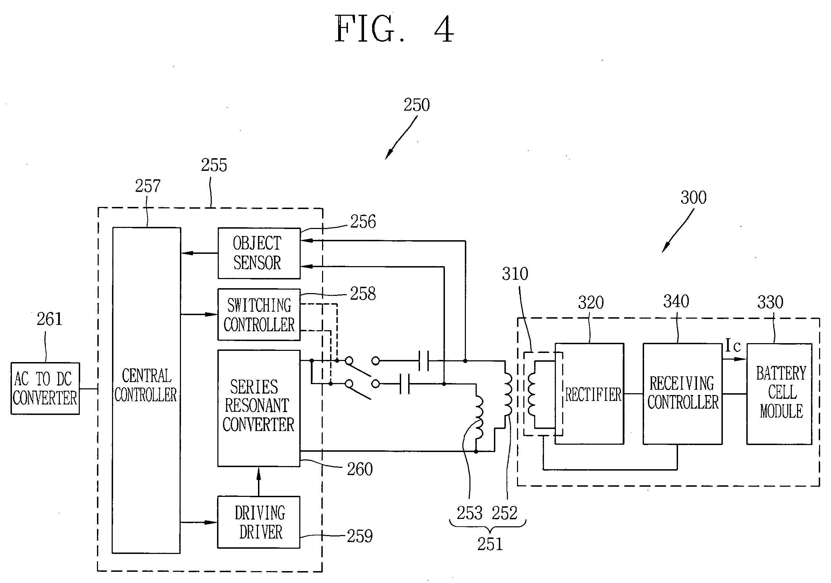

The charging module 200 is a component connected to the support module 100 and outputting a wireless power signal for charging the wireless power receiving apparatus 300. The charging module 200 may generally have a rectangular parallelepiped shape. A main surface of the charging module 200 becomes a charging surface 210a. The charging surface 210a may be mounted with the wireless power receiving apparatus 300. The charging module 200 has a pair of support guards 215 disposed at both sides of the main surface to prevent the wireless power receiving apparatus 300 from being separated from the charging surface 210a. The pair of support guards 215 may be adjusted to become distant from or close to each other depending on a size of the wireless power receiving apparatus 300. Here, the wireless power receiving apparatus 300 may be a portable electronic device such as a cellular phone, an audio player, or the like, and have various sizes. In this case, the pair of support guards 215 of which a width is adjusted may cope with an audio player having a relatively small size, a cellular phone having a size larger than that of the audio player, a note pad having a size larger than that of the cellular phone, and the like. A configuration for wirelessly charging the wireless power receiving apparatus will be described below with reference to FIG. 4.

The support module 100 and the charging module 200 described above will be described in more detail with reference to FIG. 2.

FIG. 2 is an exploded perspective view of the wireless power transmitting apparatus 10 for a vehicle according to the exemplary embodiment of the present invention of FIG. 1.

Referring to FIG. 2, the support module 100 may include the support body 110, the connection jack 130, and the first terminal 150 as described above.

The support body 110 may include a first connection part 111, a support part 115, and an extension part 117.

The first connection part 111 is positioned at the other end of the extension part 117 opposite to one end portion of the extension part 117 at which the support part 115 is positioned. The first connection part 111 is a component for mechanical connection with the charging module 200. More specifically, the first connection part 111 may include a head part 112 and a neck part 113. The head part 112 may have a hemispherical shape. The neck part 113, which is a part connecting the heat part 112 to the extension part 117, is formed to have a cross-sectional area smaller than that of a maximum cross-sectional area part (a part at which a ring terminal 153 is formed) of the head part 112.

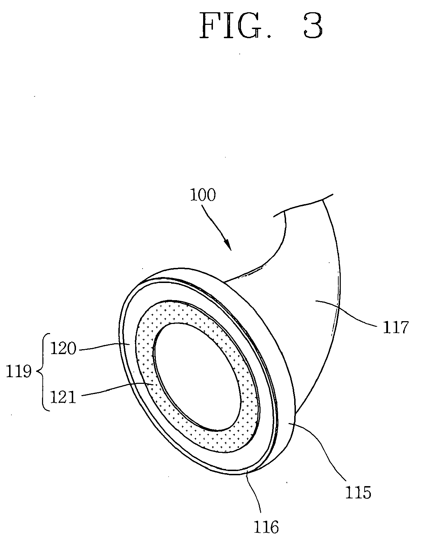

The support part 115, which is a part supported by the vehicle, is formed to have the widest cross-sectional area in the support body 110. The support part 115 may have a support surface 116 (See FIG. 3), which is a flat surface, contacting the vehicle.

The extension part 117 is a part extended from the support part 115 up to the first connection part 111. A length of the extension part 117 may be determined in consideration of an interval by which the charging module 200 is spaced apart from the dash board D (See FIG. 1) of the vehicle. The extension part 117 may be provided with an operational lever 118 for forming a vacuum by pulling the center of the attachment pad 119 in order to attach the attachment pad 119 (See FIG. 3) to the dash board D. The case in which the operational lever 118 is disposed in a height direction of the support body 110 is illustrated by way of example. However, the operational lever 118 may be disposed in another direction of the support body 110, for example, a horizontal direction.

The connection jack 130 is a component for receiving the power of the vehicle as described above. The connection jack 130 may be connected to the extension part 117 through the electric wire 131.

The first terminal 150 is installed at the first connection part 111. The first terminal 150 is electrically connected to the connection jack 130 through the electric wire 131. The first terminal 150 is to transfer the power input from the connection jack 130 to the charging module 200. The first terminal 150 may include a free terminal 151 and a ring terminal 153. The free terminal 151 is a terminal disposed at a free end of the head part 112. The free terminal 151 may be a disk shaped metal. Meanwhile, the ring terminal 153 may be installed along a circumference of the maximum cross-sectional area part of the head part 112. The ring terminal 153 may be a ring shaped metal. Unlike this, the first terminal 150 may also be installed at other components rather than the first connection part 111.

The charging module 200 may include a charging body 210, a second terminal 230, and an output unit 250 (See FIG. 4).

The charging module 210 may generally have a wide rectangular parallelepiped shape. The charging body 210 may include an installation surface 210b opposite to the charging surface 210a (See FIG. 1). The installation surface 210b is provided with a second connection part 211. The second connection part 211 is a component mechanically coupled to the first connection part 111 of the support module 100. To this end, the second connection part 211 may include a recess part 212 and a sidewall part 213. The recess part 212 may be recessed in a hemispherical shape so as to accommodate the head part 112 therein. The sidewall part 213 may protrude from the installation surface 210b so as to enclose the recess part 212. The sidewall part 213 may include a catching part 213a formed on an inner surface thereof and an outer peripheral screw thread 213b formed on an outer surface thereof. The support guard 215 protrudes from a side of the charging body 210 so as to enclose the charging surface 210a (See FIG. 1). The second connection part 211 may further include a clamping pipe 217. The clamping pipe 217, which has a shape of a pipe having a hollow part, includes an inner peripheral screw thread 218 formed in an inner peripheral surface thereof. The clamping pipe 217 may include a plurality of ribs 219 formed at predetermined intervals on an outer peripheral surface thereof.

The second terminal 230 is a component electrically connected to the first connection part 150 of the support module 100. The second terminal 230 may include a central terminal 231 and an inner peripheral terminal 233. The central terminal 231 is formed at the center of the recess part 212. To this end, the central terminal 231 may be a disk shaped metal. The inner peripheral terminal 233, which is formed in circumferential direction on an inner peripheral surface of the sidewall part 213, may generally be a ring shaped metal. Unlike this, the second terminal 230 may also be installed at other components rather than the second connection part 211. For example, aside from mechanical connection between the first and second connection parts 111 and 211, the second terminal 230 may also be directly connected to the first terminal 150.

The output unit 250 is a component positioned between the charging surface 210a and the installation surface 210b of the charging body 210 and outputting a wireless power signal from the power input through the second terminal 230. In this case, the wireless power signal output from the output unit 250 moves while passing through the charging surface 210a.

Next, the attachment pad 119 installed on the support surface 116 of the support part 115 of the support module 100 will be described with reference to FIG. 3.

FIG. 3 is a perspective view showing the attachment pad 119 of the support module 100 of FIG. 2.

Referring to FIG. 3, the attachment pad 119 generally has a flat structure so as to be attached to the support surface 116. In the present embodiment, the attachment pad 119 has a two-layer structure.

More specifically, the attachment pad 119 includes a silicon plate 120 and a reinforcing plate 121.

The silicon plate 120 may be made of a silicon material and have an area corresponding to the entire region of the support surface 116. In the present embodiment, the silicon plate 120 may be formed in a disk shape so as to correspond to the disk shaped support surface 116.

The reinforcing plate 121 may be made of a material having a coefficient of friction higher than that of the silicon plate 120. In addition, the reinforcing plate 121 is provided so as to correspond to one region of the silicon plate 120. In the present embodiment, the reinforcing plate 121 may have a circular ring shape. The reinforcing plate 121 may be made of a sponge material. The sponge, which is a spongy porous material having elasticity, is mainly made of a synthetic resin. The sponge may be a compressed hard type.

Next, the output unit 250 installed in the charging body 210 of the charging module 200 of FIG. 2 and the wireless power receiving apparatus 300 corresponding to the charging module 200 and wirelessly receiving a power signal to thereby be charged will be described with reference to FIG. 4.

FIG. 4 is a block diagram for describing wireless charging between the output unit 250 of the charging module 200 of FIG. 2 and the wireless power receiving apparatus 300.

Referring to FIG. 4, a wireless power charging system according to the exemplary embodiment of the present invention includes the wireless power transmitting apparatus 10 and the wireless power receiving apparatus 300. When the wireless power transmitting apparatus 10 transmits the wireless power signal to the wireless power receiving apparatus 300 by an electromagnetic induction scheme, the wireless power receiving apparatus 300 receiving the wireless power signal charges a battery with a power of the wireless power signal or supplies power to an electronic device connected thereto.

Hereinafter, the wireless power transmitting apparatus 10, more specifically, an operation relationship between the output unit 250 of the charging module 200 and the wireless power receiving apparatus 300 will be described, respectively.

The output unit 250 includes a primary coil 251, a transmitting control unit 255, and an alternating current (AC) to direct current (DC) converter 261.

The primary coil 251, which is an apparatus for transmitting the power signal to a secondary coil 310 of the power receiving apparatus 300 in the electromagnetic induction scheme, may include two coils (that is, a first coil 252 and a second coil 253) in the present embodiment.

The transmitting control unit 255 controlling the primary coil 251 may include an object sensor 256, a central controller 257, a switching controller 258, a driving driver 259, and a series resonant converter 260.

The object sensor 256 serves to sense a load change of the primary coil 251, judge that the corresponding load change is caused by the wireless power receiving apparatus 300 (that is, function as an identification (ID) confirming unit), and filter and process a charged state signal transmitted from the wireless power receiving apparatus 300. For example, when an ID signal, which is a response signal of an ID call signal transmitted through the primary coil 251, is received, the object sensor 256 filters and processes the ID signal. When the charged state signal including information on a battery cell or a charging voltage is received during a charging period, the object sensor serves to filter and process the charged state signal.

The central controller 257 serves to receive and confirm a judgment result of the object sensor 256, analyze the ID signal received at the primary coil 251, and transmit the power signal for outputting the wireless power signal through the primary coil 251 to the driving driver 259. In addition, when the charged state signal is received from a primary coil to be described below, the central controller 257 serves to control the driving driver 259 based on the charged state signal to change the wireless power signal.

The switching controller 258 controls a switching operation of a switch between the series resonant converter 260 and the first and second coils 252 and 253. Although two sub coils 252 and 253 have been used in the present invention, the present invention is not limited thereto, but also includes the case in which one coil is used. In the case in which one coil is used, the switching controller 258 is not required.

The driving driver 259 controls an operation of the series resonant converter 260 under a control of the central controller 257.

The series resonant converter 260 generates an output power for generating a power signal that is to be output under a control of the driving driver 259 and supplies the generated output voltage to the primary coil 251. In other words, when the central controller 257 transmits the power control signal for outputting the power signal having a demanded power value to the driving driver 259, the driving driver 259 controls an operation of the series resonant converter 260 according to the transmitted power control signal, and the series resonant converter 260 applies an output power corresponding to the demanded power value to the primary coil 251 under a control of the driving driver 259 to allow a wireless power signal having demanded strength to be output.

The series resonant converter 260 serves to supply powers for generating a first object sensing signal and a second object sensing signal through the first and second coils 252 and 253 under the control of the driving driver 259.

The AC to DC converter 261, which is an apparatus converting an AC power of 220V or 110V into a DC power of a predetermined voltage, has an output voltage value changed under the control of the central controller 257.

The wireless power receiving apparatus 300 supplied with the power by receiving the power signal includes a secondary coil 310 generating an induced power by the output power signal, a rectifier 320 rectifying the induced power, a battery cell module 330 charged with the rectified power, and a receiving controller 340 controlling the secondary coil 310, the rectifier 320, and the battery cell module.

The secondary coil 310 is a component for receiving the wireless power signal transmitted from the primary coil 251 of the output unit 250.

The rectifier 320 rectifies the wireless power received from the secondary coil 310 into a DC voltage and is maintained in a state in which it is charged with a charging voltage before the charging starts.

The battery cell module 330 is a charging target charged with the DC power from the rectifier 320 under the control of the receiving controller 340. Meanwhile, the battery cell module 330 includes a protection circuit such as an overvoltage and overcurrent preventing circuit, a temperature sensing circuit, and the like, and includes a charging managing module collecting and processing information such as a charged state of the battery cell, or the like.

The receiving controller 340 is a component controlling a current of the power charged in the rectifier 320 to allow an appropriate current to flow to the battery cell module 330.

Meanwhile, in order to detect a wireless power receiving signal transmitted from the wireless power receiving apparatus 300, for example, three sensors may be installed. Although not shown in the accompanying drawings, according to the exemplary embodiment of the present invention, a DC current sensor for measuring a DC current of the driving driver 259 and an AC current sensor and an AC voltage sensor for measuring an AC current and an AC voltage of the primary coil 251, respectively, may be installed. That is, when the wireless power receiving signal (including the ID signal and the charged state signal) is received from the wireless power receiving apparatus 300 through the primary coil 251, a current and a voltage at the primary coil 251 and a current at the driving driver 259 are changed, and this change is sensed to receive the wireless power receiving signal. According to the exemplary embodiment of the present invention, the wireless power receiving signal may be more accurately received using three sensors. That is, the central controller 257 generates an error signal only in the case in which all of the signals from the AC current sensor, the DC current sensor, and the AC voltage sensor are erroneous and controls an operation based on a normally received signal in the case in which any one of the signals from the AC current sensor, the DC current sensor, and the AC voltage sensor is a normal signal. In the case in which two or more signals are normal signals, the central controller 257 measures power levels of two or more signals, selects an optimal signal (a signal having the highest power level), and processes the optimal signal to obtain the wireless receiving signal, thereby controlling wireless power transmission.

The wireless power receiving signal is detected using the three sensors as described above, such that even though a position of the wireless power receiving apparatus 300 is changed during a charging period, reliability of a power control may be increased.

Hereinafter, an operation of the wireless power transmitting apparatus 10 for a vehicle by the above-mentioned configuration will be described with reference to FIGS. 1 to 4.

First, an installation structure of the wireless power transmitting apparatus 10 for a vehicle will be described.

The support module 100 of the wireless power transmitting apparatus 10 for a vehicle is attached to the dash board D through the attachment pad 119. The support body 110 is firmly supported by the dash board D by the attachment pad 110 attached to the dash board D.

The charging module 200 is connected to the support module 100. The connection between the support module 100 and the charging module 200 is performed by coupling the first connection part 111 of the support module 100 and the second connection part 211 of the charging module 200 to each other. More specifically, the head part 112 of the first connection part 111 is accommodated in the recess part 212 of the second connection part 211. In this case, the catching part 213a of the sidewall part 213 of the second connection part 211 is caught by the head part 112 (more specifically, a part connected to the neck part 113) of the first connection part 111. Disposition of the charging module 200 may be adjusted by rotating the charging module 200 in various directions in a state in which the charging module 200 is coupled to the support module 100. Therefore, an angle of the wireless power receiving apparatus 300 seated on the charging module 200 may be disposed in one of various forms depending on a body type or a preference of a vehicle user (a driver or a passenger). For example, when the wireless power receiving apparatus 300 is a cellular phone and an image is viewed through a display of the cellular phone, dispositions forms of the wireless power receiving apparatus 300 desired by the users will be various. In this case, the wireless power receiving apparatus 300 is in a state in which it is stably coupled to the charging module 200 by the pair of support guards 215 between which an interval is adjustable, regardless of a size thereof.

In order to fix the charging module 200 with respect to the support module 100 in one disposition state, the clamping pipe 217 is clamped with respect to the outer peripheral screw thread 213b of the sidewall part 213 to allow the sidewall part 213 to clamp the head part 112 with movement. The clamping pipe 217 may be again unclamped to adjust a position or an angle of the charging module 200.

Next, an electrical connection relationship of the wireless power transmitting apparatus 10 for a vehicle and wireless charging for the wireless power receiving apparatus 300 through the electrical connection relationship will be described.

The connection jack 130 is connected to the power supply jack P of the vehicle to receive the power of the vehicle. This power is supplied to the first terminal 150 connected to the connection jack 130. The power of the first terminal 150 is supplied to the second terminal 230 connected to the first terminal 150. As described above, even though the charging module 200 is rotated at various angles with respect to the support module 100, the first terminal 150 installed at the first connection part 111 and the second terminal 130 installed at the second connection part 211 are in a state in which they are always conducted each other.

The power supplied to the second terminal 230 is supplied to the AC to DC converter 261 of the output unit 250 installed in the charging body 210. This power is output in a direction in which it passes through the charging surface 210a as the wireless power signal by the output unit 250.

The wireless power receiving apparatus 300 receiving the wireless power signal charges the battery cell module 330 as described above with reference to FIG. 4.

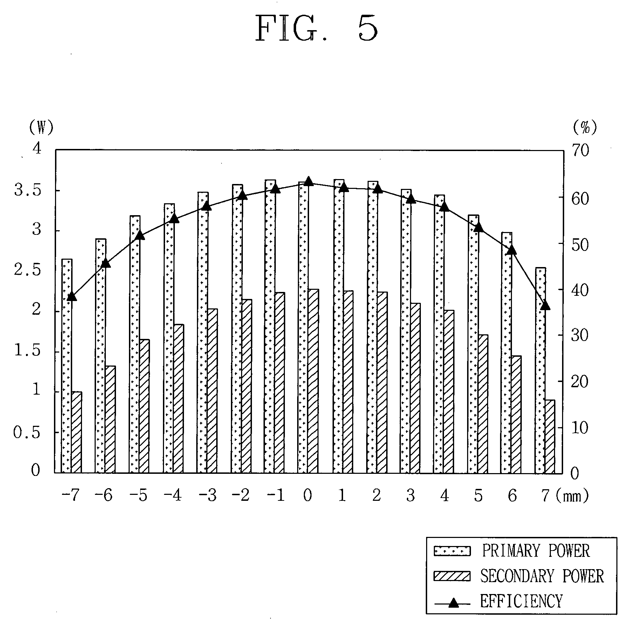

Next, a charging scheme depending on a change in a position at which the wireless power receiving apparatus 300 is mounted with respect to the wireless power transmitting apparatus 10 will be described with reference to FIGS. 5 to 10.

More specifically, the wireless power receiving apparatus 300 on the wireless power transmitting apparatus 10, more specifically, the battery cell module 330 moves (including a change from a set position depending on a difference in a size of the wireless power receiving apparatus 300) during a period in which the wireless power transmitting apparatus 10 is operated in order to charge the wireless power receiving apparatus 300, such that the power transmitted to the battery cell module 330 may become lower than a reference value. In this case, the wireless power receiving apparatus 300 transmits a signal to the wireless power transmitting apparatus 10 so as to reinforce the power lower than the reference value. For example, when it is assumed that a reference voltage is 5V and a reference deviation value is 0.5V, in the case in which a voltage lower than 4.5V is received due to movement of the battery cell module 330, an originating signal is controlled by the receiving controller 340 so that the power is boosted by about 0.5V is then transmitted. In response, the wireless power transmitting apparatus 10 increases an originating power of the primary coil 251 so that the power is boosted by 0.5V and is then received, thereby allowing an increased induced magnetic field to be originated. As an example of a scheme of increasing the originating power output from the wireless power transmitting apparatus 10, an originating frequency may be changed.

As described above, the originating power transmitted from the wireless power transmitting apparatus 10 is configured to be changed, and a charging efficiency for a change in a distance of the battery cell module 330 from the wireless power transmitting apparatus 10 is shown in FIGS. 5 to 10. That is, FIGS. 5 to 8 show a primary power W in the wireless power transmitting apparatus 10, a secondary power W in the battery cell module 330, an efficiency %, and the like, while moving the battery cell module 330 between -7 to 7 mm in a horizontal direction and a vertical direction in the case in which a secondary reference power of the battery cell module 330 is about 2.5W. Here, the efficiency % is represented as an efficiency ((secondary power/primary power)*100) of an output side power applied to a secondary side of the battery cell module 330 with respect to a primary input power of the wireless power transmitting apparatus 10.

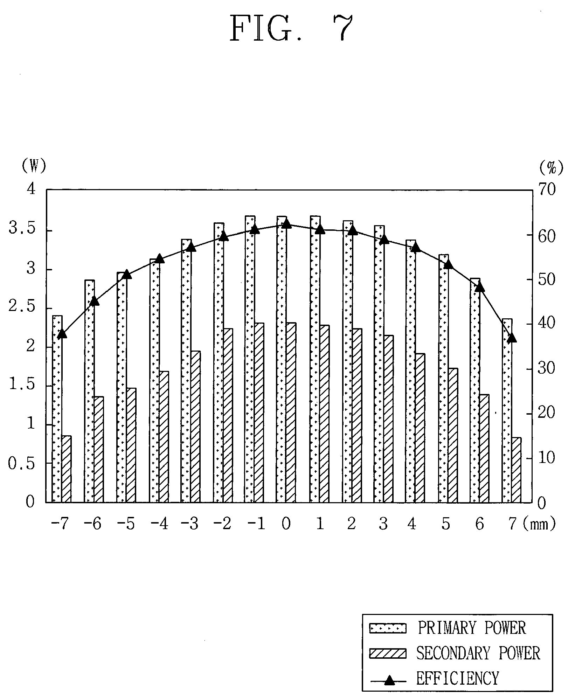

FIGS. 5 and 7, which shows a graph in which the secondary power of the battery cell module 330 is between 1 to 2.2W, shows a charging efficiency in the case in which the battery cell module 330 is charged without a change in a frequency in the wireless power transmitting apparatus 10 with respect to changes in a horizontal distance and a vertical distance between the wireless power transmitting apparatus 10 and the battery cell module 330. That is, it could be seen that in the case of moving the battery cell module 330 in the horizontal direction or the vertical direction with respect to the wireless power transmitting apparatus 10, the secondary power of the battery cell module 330 is decreased as it becomes distant from the center, such that the efficiency is decreased.

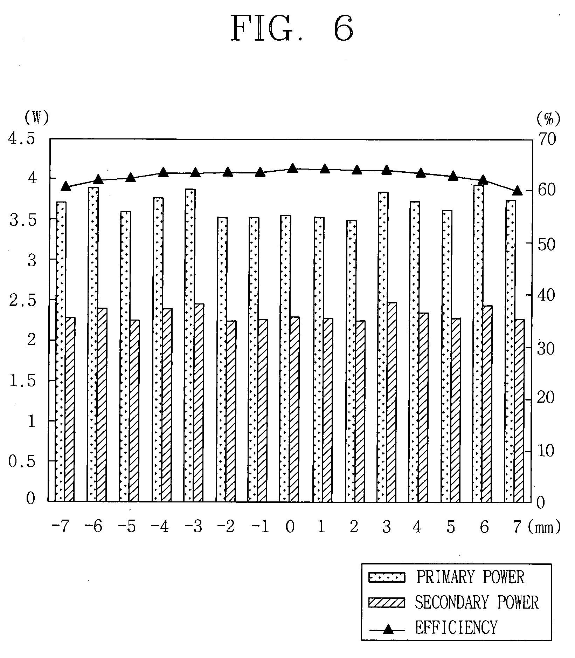

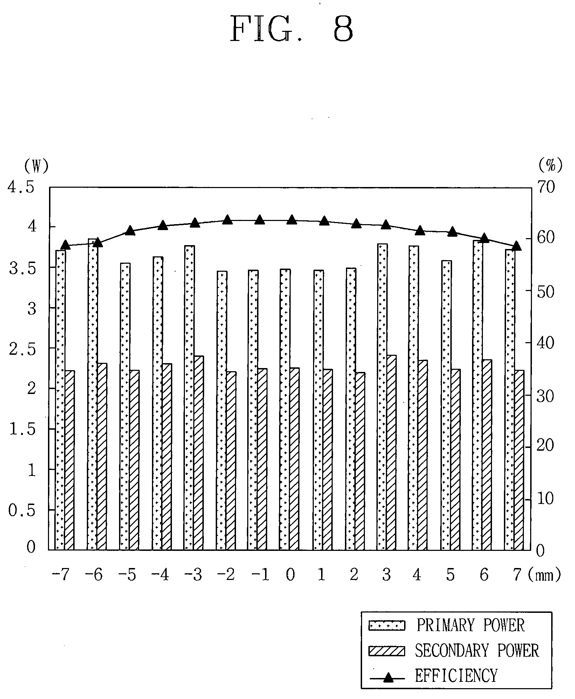

FIGS. 6 and 8 compared with FIGS. 5 and 7 show that as the battery cell module 300 moves from the charging surface 210a of the wireless power transmitting apparatus 10 in each of the horizontal direction and the vertical direction, the wireless power transmitting apparatus 10 receives information on a change in a receiving power in the battery cell module 330 to change a frequency, thereby controlling a power. It could be appreciated from FIGS. 6 and 8 that the power is stably transmitted, such that a power transmission efficiency is good.

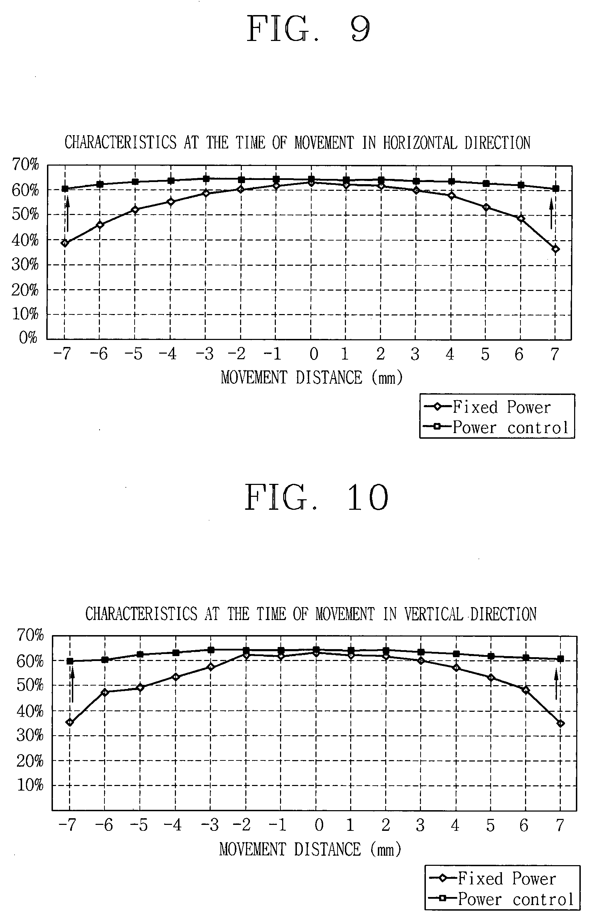

In addition, FIG. 9 is a graph showing an efficiency for movement in the horizontal direction; and FIG. 10 is a graph showing an efficiency for movement in the vertical direction. It could be appreciated from FIGS. 9 and 10 that the efficiency is better in the case in which the frequency is changed (a rectangular point graph of an upper side, POWER CONTROL) than in the case in which the frequency is fixed (a curve graph of a lower side, FIXED POWER).

With the wireless power transmitting apparatus for a vehicle according to the exemplary embodiment of the present invention configured as described above, it is possible to freely change a disposition state of a wireless power receiving apparatus that is being charged while performing wireless charging for the wireless power receiving apparatus.

This increases a degree of freedom for disposition of the wireless power receiving apparatus to improve user's convenience for utilization of the wireless power receiving apparatus. In addition, in this utilization, since a main power supply for supplying a power to the wireless power transmitting apparatus is used as a vehicle power supply, the supply of the power is not stopped or is not unstable.

Further, since a cable for supplying the power is connected to the wireless power charging apparatus spatially closer to the dash board of the vehicle than the wireless power receiving apparatus, a length of the cable is short, such that the cable may be cleanly arranged.

## Claims

1. A wireless power transmitting apparatus for a vehicle (10), comprising:
a support module (100) including a support body (110) having a first connection part (111);
a connection jack (130) configured to
**characterized in that**:
the connection jack (130) is further configured to be connected to the support body (110) be connected to a power supply jack (P) of the vehicle **in that** the support body (110) further has a first terminal (150) installed at the first connection part (111) and electrically connected to the connection jack (130); and
a charging module (200) including a charging body (210) having a second connection part (211) rotatably connected to the first connection part (111),
**in that** the chargin body (210) further has a second terminal (230) installed at the second connection part (211) and connected to the first terminal (150),
and an output unit (250) configured to output a wireless power signal by a power input from the connection jack (130),
the power from the connection jack (130) to the output unit (250) being provided through the second terminal (230),
**in that** the first connection part (111) includes:
a head part (112) having a hemispherical shape; and
a neck part (113) extended from the head part (112) and having a cross-sectional area smaller than that of a maximum cross-sectional area part of the head part (112),
**in that** the second connection part (211) includes:
a recess part (212) configured to accommodate the head part (112) therein and having a hemispherical shape; and
a sidewall part (213) protruding so as to enclose the recess part (212) and including a catching part (213a) engaged with the neck part (113),
**in that** the first terminal (150) includes:
a free terminal (151) formed at a free end of the head part (112); and
a ring terminal (153) formed in a ring shape along a circumference of the maximum cross-sectional area part of the head part (112),
and **in that** the second terminal (230) includes:
a central terminal (231) formed at the center of the recess part (212) and connected to the free terminal (151); and
an inner peripheral terminal (233) formed in a circumferential direction on an inner peripheral surface of the sidewall part (213) and connected to the ring terminal (153).

2. The wireless power transmitting apparatus for a vehicle (10) of claim 1, wherein the sidewall part (213) includes an outer peripheral screw thread (213b) formed on an outer peripheral surface thereof, and
the second connection part (211) includes a clamping pipe (217) having a hollow part and an inner peripheral thread screw (218) provided at the hollow part and be screwed to the outer peripheral screw thread (213b).

3. The wireless power transmitting apparatus for a vehicle (10) of claim 1, wherein the support body (110) includes:
a support part (115) having a support surface (116) supported by the vehicle;
an extension part (117) extended from the support part (115) up to the first connection part (111); and
an attachment pad (119) installed on the extension part (117) so as to be overlapped with the support surface (116) and including a silicon plate (120) and a reinforcing plate (121) installed at a region of the silicon plate (120) and made of a material having a coefficient of friction higher than that of the silicon plate (120).

4. The wireless power transmitting apparatus for a vehicle (10) of claim 3, wherein the reinforcing plate (121) includes a sponge layer formed in a circular ring shape.

5. The wireless power transmitting apparatus for a vehicle (10) of claim 1, wherein the charging body (210) includes a charging surface (210a) and an installation surface (210b) opposite to the charging surface (210a) and having the second connection part (211) installed thereon, and
the output unit (250) is disposed between the charging surface (210a) and the installation surface (210b) and is configured to output the wireless power signal toward the charging surface (210a).

6. The wireless power transmitting apparatus for a vehicle (10) of claim 5, wherein the charging body (210) further includes a support guard (215) protruding from a side part of the charging surface (210a) and configured to support a wireless power receiving apparatus (300) put on the charging surface (210a).

## Patentansprüche

1. Drahtlose Energieübertragungsvorrichtung für ein Fahrzeug (10), umfassend:
ein Trägermodul (100) umfassend einen Trägerkörper (110), der ein erstes Verbindungsteil (111) aufweist;
einen Verbindungsjack (130), der für die Verbindung mit einem Energiezuführjack (P) des Fahrzeugs konfiguriert ist, und
ein Lademodul (200) umfassend einen Ladekörper (210), der ein zweites Verbindungsteil (211) aufweist, das mit dem ersten Verbindungsteil (111) drehbar verbunden ist;
und eine Ausgabeeinheit (250), die für die Ausgabe eines drahtlosen Energiesignals durch eine Energieeingabe von dem Verbindungsjack (130) konfiguriert ist;
**dadurch gekennzeichnet, dass**:
der Verbindungsjack (130) ferner für die Verbindung mit dem Trägerkörper (110) konfiguriert ist;
dass der Trägerkörper (110) ferner einen ersten Anschluss (150) aufweist, der an dem ersten Verbindungsteil (111) installiert und mit dem Verbindungsjack (130) elektrisch verbunden ist;
dass der Ladekörper (210) ferner einen zweiten Anschluss (230) aufweist, der an dem zweiten Verbindungsteil (211) installiert und mit dem ersten Anschluss (150) verbunden ist;
wobei die Energie von dem Verbindungsjack (130) zu der Ausgabeeinheit (250) durch den zweiten Anschluss (230) bereitgestellt wird;
dass das erste Verbindungsteil (111) umfasst:
ein Kopfteil (112), das eine hemisphärische Form aufweist; und
ein Halsteil (113), das sich von dem Kopfteil (112) erstreckt und eine Querschnittsfläche aufweist, die kleiner als die eines maximalen Querschnittsflächenteils des Kopfteils (112) ist;
dass das zweite Verbindungsteil (211) umfasst:
ein Aussparungsteil (212), das für die Aufnahme des Kopfteils (112) in diesem konfiguriert ist und eine hemisphärische Form aufweist; und
ein Seitenwandteil (213), das so vorsteht, dass es das Aussparungsteil (212) umschließt und ein Arretierungsteil (213ä) umfasst, das mit dem Halsteil (113) in Eingriff steht;
dass der erste Anschluss (150) umfasst:
einen freien Anschluss (151), der an einem freien Ende des Kopfteils (112) ausgebildet ist; und
einen Ringanschluss (153), der in einer Ringform entlang eines Umfangs des maximalen Querschnittsflächenteils des Kopfteils (112) ausgebildet ist;
und dass der zweite Anschluss (230) umfasst:
einen zentralen Anschluss (231), der im Zentrum des Aussparungsteils (212) ausgebildet und mit dem freien Anschluss (151) verbunden ist; und
einen inneren peripheren Anschluss (233), der in einer Umfangsrichtung an einer inneren Umfangsfläche des Seitenwandteils (213) ausgebildet und mit dem Ringanschluss (153) verbunden ist.

2. Drahtlose Energieübertragungsvorrichtung für ein Fahrzeug (10) nach Anspruch 1, wobei das Seitenwandteil (213) ein äußeres peripheres Schraubengewinde (213b) umfasst, das an einer äußeren Umfangsfläche von diesem ausgebildet ist, und
das zweite Verbindungsteil (211) ein Klemmrohr (217) umfasst, das einen hohlen Teil und ein inneres peripheres Schraubengewinde (218) aufweist, das an dem hohlen Teil vorgesehen ist und an das äußere periphere Schraubengewinde (213b) zu schrauben ist.

3. Drahtlose Energieübertragungsvorrichtung für ein Fahrzeug (10) nach Anspruch 1, wobei der Trägerkörper (110) umfasst:
ein Trägerteil (115), das eine vom Fahrzeug getragene Trägerfläche (116) aufweist;
ein Erstreckungsteil (117), das sich von dem Trägerteil (115) bis zu dem ersten Verbindungsteil (111) erstreckt; und
ein Befestigungspad (119), das an dem Erstreckungsteil (117) so installiert ist, dass es mit der Trägerfläche (116) überlappt und eine Silikonplatte (120) und eine Verstärkungsplatte (121) umfasst, die an einem Bereich der Silikonplatte (120) installiert und aus einem Material hergestellt ist, das einen Reibungskoeffizienten aufweist, der höher als der der Silikonplatte (120) ist.

4. Drahtlose Energieübertragungsvorrichtung für ein Fahrzeug (10) nach Anspruch 3, wobei die Verstärkungsplatte (121) eine Schwammschicht umfasst, die in Form eines kreisförmigen Rings ausgebildet ist.

5. Drahtlose Energieübertragungsvorrichtung für ein Fahrzeug (10) nach Anspruch 1, wobei der Ladekörper (210) eine Ladefläche (210a) und eine der Ladefläche (210a) gegenüberliegende Installierungsfläche (210b) umfasst, an der das zweite Verbindungsteil (211) installiert ist; und
die Ausgabeeinheit (250) zwischen der Ladefläche (210a) und der Installierungsfläche (210b) angeordnet und für die Ausgabe des drahtlosen Energiesignals in Richtung der Ladefläche (210a) konfiguriert ist.

6. Drahtlose Energieübertragungsvorrichtung für ein Fahrzeug (10) nach Anspruch 5, wobei der Ladekörper (210) ferner einen Stützschutz (215) umfasst, der von einem Seitenteil der Ladefläche (210a) vorsteht und für das Abstützen eines auf die Ladefläche (210a) gelegten Geräts für den drahtlosen Energieempfang (300) konfiguriert ist.

## Revendications

1. Appareil de transmission d'énergie sans fil pour un véhicule (10), comportant :
un module de support (100) comprenant un corps de support (110) ayant une première partie de raccordement (111),
un connecteur mâle (130) configuré pour être raccordé à un connecteur femelle d'alimentation (P) du véhicule, et
un module de charge (200) comprenant un corps de charge (210) ayant une seconde partie de raccordement (211) reliée de manière rotative à la première partie de raccordement (111), et une unité de sortie (250) configurée pour délivrer en sortie un signal de puissance sans fil par une entrée d'alimentation du connecteur mâle (130),
**caractérisé en ce que** :
le connecteur mâle (130) est en outre configuré pour être raccordé au corps de support (110),
**en ce que** le corps de support (110) a en outre une première borne (150) installée sur la première partie de raccordement (111) et électriquement reliée au connecteur mâle (130), et
**en ce que** le corps de charge (210) a en outre une seconde borne (230) installée sur la seconde partie de raccordement (211) et reliée à la première borne (150), l'énergie du connecteur mâle (130) à l'unité de sortie (250) étant fournie par la seconde borne (230),
**en ce que** la première partie de raccordement (111) comprend :
une partie de tête (112) ayant une forme hémisphérique, et
une partie de col (113) s'étendant à partir de la partie de tête (112) et ayant une aire de section transversale plus petite que celle d'une partie d'aire de section transversale maximale de la partie de tête (112),
**en ce que** la seconde partie de raccordement (211) comprend :
une partie d'évidement (212) configurée pour recevoir la partie de tête (112) dans celle-ci et ayant une forme hémisphérique, et
une partie de paroi latérale (213) faisant saillie de manière à entourer la partie d'évidement (212) et comprenant une partie de prise (213a) en prise avec la partie de col (113),
**en ce que** la première borne (150) comprend :
une borne libre (151) formée sur une extrémité libre de la partie de tête (112), et
une borne annulaire (153) de forme annulaire le long d'une circonférence de la partie d'aire de section transversale maximale de la partie de tête (112), et
et **en ce que** la seconde borne (230) comprend :
une borne centrale (231) formée au centre de la partie l'évidement (212) et relié à la borne libre (151), et
une borne périphérique interne (233) formée dans une direction circonférentielle sur une surface périphérique intérieure de la partie de paroi latérale (213) et reliée à la borne annulaire (153).

2. Appareil de transmission d'énergie sans fil pour un véhicule (10) selon la revendication 1, dans lequel la partie de paroi latérale (213) comprend un filet de vis périphérique extérieur (213b) formé sur une surface périphérique extérieure de celle-ci, et
la seconde partie de raccordement (211) comprend une bague de serrage (217) ayant une partie creuse et un filet de vis périphérique intérieur (218) agencé sur la partie creuse et devant être vissé avec le filet de vis périphérique extérieur (213b).

3. Appareil de transmission d'énergie sans fil pour un véhicule (10) selon la revendication 1, dans lequel le corps de support (110) comprend :
une partie de support (115) ayant une surface de support (116) supportée par le véhicule,
une partie d'extension (117) s'étendant à partir de la partie de support (115)jusqu'à la première partie de raccordement (111), et
une embase de fixation (119) installée sur la partie d'extension (117) de manière à pouvoir être recouverte avec la surface de support (116) et comprenant une plaque de silicium (120) et une plaque de renfort (121) installée sur une zone de la plaque de silicium (120) et constituée d'un matériau ayant un coefficient de frottement supérieur à celui de la plaque de silicium (120).

4. Appareil de transmission d'énergie sans fil pour un véhicule (10) selon la revendication 3, dans lequel la plaque de renfort (121) comprend une couche spongieuse ayant une forme d'anneau circulaire.

5. Appareil de transmission d'énergie sans fil pour un véhicule (10) selon la revendication 1, dans lequel le corps de charge (210) comprend une surface de charge (210a) et une surface d'installation (210b) opposée à la surface de charge (210a) et ayant la seconde partie de raccordement (211) installée sur celle-ci, et
l'unité de sortie (250) est disposée entre la surface de charge (210a) et la surface d'installation (210b) et est configurée pour délivrer en sortie le signal d'énergie sans fil vers la surface de charge (210a).

6. Appareil de transmission d'énergie sans fil pour un véhicule (10) selon la revendication 5, dans lequel le corps de charge (210) comprend en outre une patte de support (215) faisant saillie à partir d'une partie latérale de la surface de charge (210a) et configurée pour supporter un appareil de réception d'énergie sans fil (300) placé sur la surface de charge (210a).
